# EUROPÄISCHE PATENTSCHRIFT

(11) **EP 1 998 098 B1**
(45) Veröffentlichungstag und Bekanntmachung des Hinweises auf die Patenterteilung: **23.11.2011**
(21) Anmeldenummer: 08007011.3
(22) Anmeldetag: 09.04.2008
(51) Int. Cl.: F16L 47/03

(54) **Rohrkupplung mit dauerhafter, belastbarer mediendichter Verschweissung**
Pipe coupling with long-lasting, resilient and media-proof welding
Accouplement tubulaire doté d'une soudure pouvant être chargée, durable et étanche aux substances

(30) Priorität: 15.04.2007 DE 102007018297
(43) Veröffentlichungstag der Anmeldung: 03.12.2008
(73) Patentinhaber: Maincor Anger GmbH, 45768 Marl (DE)
(72) Erfinder: Heidenreich, Gerhard, 45768 Marl (DE)
(74) Vertreter: Gehrke, Peter P.

(56) Entgegenhaltungen:
- DE-A1- 19 611 883
- GB-A- 2 268 439
- US-A- 6 149 756

## Beschreibung

Die Erfindung betrifft eine Rohrkupplung, welche ein Rohr und eine Muffe umfasst, das Rohr und die Muffe mit einem thermoplastischen kunststoffartigen Material hergestellt sind, das Rohr mit seinem Spitzende in die Muffe einschiebbbar ist, das Rohr zumindest an der Außenfläche des Spitzendes in Umfangsrichtung sich erstreckende Rippen aufweist, zwischen der Muffe und dem in die Muffe eingeschobenen Spitzende des Rohrs zwischen zwei benachbarten Rippen ein Schweißring angeordnet ist, der Schweißring mit einem thermoplastischen kunststoffartigen Werkstoff und einer Einrichtung als elektrische Widerstandsheizung mit Anschlussleitungen ausgebildet ist, der thermoplastische kunststoffartige Werkstoff des Schweißrings mit dem thermoplastischen kunststoffartigen Material des Rohrs und der Muffe übereinstimmt, und ein Verfahren zur Herstellung von Rohrkupplungen mit dauerhafter, belastbarer mediendichter Verschweißung unter Längskraftschluss.

Im Stand der Technik sind Verfahren zum Verschweißen stumpf gestoßener Rohr aus Kunststoff und einem Schweißelement zur Durchführung des Verfahrens bekannt. Die herkömmlichen Kunststoffrohre werden stumpf verschweißt, indem die aneinander stoßenden Rohrenden kurzzeitig an einen auf eine vorbestimmte Temperatur erwärmten Schweißspiegel gepresst werden. Dadurch werden die Rohrenden erwärmt, das Material der Rohre plastisch und die Verbindung erfolgt durch Zusammenfügen der von Schweißspiegel abgehobenen Rohrenden unter Beibehaltung eines vorbestimmten Anpressdruckes.

Es ist erforderlich, dass die für die einwandfreie Verschweißung notwendige Temperatur eingehalten wird. Es zeigt sich, dass häufig die Verschweißung nicht homogen erfolgt, da Schweißstellen unterschiedlicher Dicke auftreten. Hinzukommend ist das Stumpfschweißen mit einem herkömmlichen Schweißspiegel schwierig, da die Temperatur des Schweißspiegels verhältnismäßig genau vorbestimmt eingehalten werden muss und die Temperatur der Rohrenden jedoch unterschiedlich sein kann. Die durch das Anpressen an den Schweißspiegel erwärmten Rohrenden müssen zudem möglichst genau ausgerichtet werden und zusammen gepresst werden, da ansonsten die Verformbarkeit der erwärmten Rohrenden durch Abkühlung schnell wieder zunimmt.

Hinzukommend zeigt es sich bei Herausziehen des Schweißspiegels aus der Fuge zwischen zwei Rohrenden ein Versatz der zu verschweißenden Rohr. Daher müssen hinzutretend die Rohre genau zueinander ausgerichtet sein und in dieser ausgerichteten Stellung während des Aneinanderdrückens nach Herausziehen des Schweißspiegels gehalten werden.

Ebenso zeigt sich, dass bei der Verschweißung eines herkömmlichen Schweißrings mit Rohren, welche Rippen aufweisen, die Rippen infolge des Erhitzens beim herkömmlichen Verschweißen stark erhitzen und in dem Verschweißungsbereich stark ausdünnen und der sogenannte Durchbrenneffekt der Rippen auftritt.

Hierbei wird das Rippenmaterial derart erhitzt und erweicht, dass die Rippen ihre rohrstabilisierende Steifigkeit im Bereich der Kopplungsstelle beider Rohre deutlich verlieren und die herkömmliche Rohrverbindung die tunlichst zu vermeidende sogenannte längskraftschlüssige Verbindungsschwäche aufweisen.

Hinzukommend besteht die Gefahr des Eindringens und Einwachsens von Pflanzenwurzeln in die Verbindungsstele beider Rohre, so dass die Verbindung beider Rohre von den Pflanzenwurzeln, z.B. an unregelmäßig verschweißten Stellen, aufgesprengt wird, die Flüssigkeit der Rohre in das die Rohre umgebende Erdreich austreten und aus diesem in das Innere der Rohre gelangen können. Gerade in Zeiten wachsenden Umweltbewusstseins sind eine umweltfreundliche Verlegung und die dauerhafte, nach außen hermetisch abschließende Kopplung von Rohren gefordert. Herkömmliche Rohrverbindungen vernachlässigen diesen relevanten Umweltnachteil und erweisen sich von geringer sogenannter Wurzelresistenz.

So wird in der DE 196 11 883 eine Rohrverbindung mit zwei Rohrschüssen offenbart. In dem umlaufenden Spalt zwischen der Steckmuffe des einen Rohrschusses und dem in der Steckmuffe eingeschobenen Einsteckende des anzuschließenden zweiten Rohrschusses eine strombeaufschlagbare Kunststoffmasse aus gummielastischer PE-Masse angeordnet ist. Es zeigt sich aber, dass die herkömmliche Rohrverbindung aufgrund der unzureichenden gleichmäßigen Verteilung der Kunststoffmasse im Bereich der ringförmigen Verschweißungsnaht Verschweißungsfehlstellen aufweist, so dass eine Dichtigkeit, geschweige denn eine dauerhafte Dichtigkeit, in Gebieten z.B. in Bergsenkungsgebieten, nicht ermöglicht wird.

US 6149756 zeigt eine weitere Rohrverbindung mit zwei Rohrschüssem.

Auch treten infolge von Bodensenkungen Zug- und Schubkräfte auf, wobei die ersteren die Rohre an deren herkömmlichen Verbindungsstellen auseinander zu ziehen vermögen und die letzteren die Rohre an deren Verbindungsstellen hingegen ineinander zu schieben vermögen, so dass gleichfalls Spalte und Risse entstehen, die zu Undichtigkeiten an den herkömmlichen Verbindungsstellen führen.

Aufgabe der Erfindung soll es sein, das Verbinden von Kunststoffrohren zu verbessern, so dass bei vereinfachter Handhabung eine gleich bleibende Wanddicke der zu verschweißenden Rohrenden beibehalten werden kann.

Hinzukommend soll die bereitzustellende Rohrkupplung eine dauerhafte Verbindung darstellen, um ein Austreten von Flüssigkeiten zu vermeiden.

Hinzutretend soll die Verbindung eine einfach handhabbare sein, die vor Ort bei der Montage im Erdreich erfolgen kann, ohne dass hohe Anforderungen an den Benutzer des Verfahrens zu stellen sind.

Zudem soll die Rohrsteifigkeit auch im Bereich der Verbindung nicht beeinträchtigt werden.

Ebenso soll die bereit zu stellende Rohrkupplung mechanisch steif sein und sich durch eine innige flächige Verbindung auszeichnen.

Auch soll die bereit zu stellende Rohrkupplung eine hinreichende Wurzelresistenz zeigen.

Ebenfalls soll die bereit zu stellende Rohrkupplung keinen sogenannten Durchbrenneffekt haben.

Gleichfalls soll die bereit zu stellende Rohrkupplung die sogenannte längskraftschlüssige Verbindungsschwäche vermeiden.

Zudem soll die bereit zustellende Rohrkopplung den im Erdreich auftretenden Biege- und Zugkräften entgegenwirken können, ohne dass im Gegensatz zum Stand der Technik Spalte und Risse in der Verbindungsstelle auftreten.

Hinzutretend soll die bereit zustellende Rohrkupplung eine kostengünstige und wirtschaftliche Verlegung von Kunststoffrohren ermöglichen.

Ebenfalls soll die bereit zustellende Rohrkupplung sich durch eine kurze Verschweißzeit auszeichnen zur wirtschaftlichen Verlegung von Kunststoffrohren.

Gleichfalls soll die bereit zustellende Rohrkupplung und Verfahren keine besonderen Anforderungen an die Fähigkeiten des Benutzers stellen.

Ebenso soll die bereit zustellende Rohrkupplung unabhängig von den Bodenverhältnissen, wie feuchten, bindigen Böden, steilen Hanglagen, Gebieten mit hohen Verkehrslasten und Bergsenkungen und zur Ableitung wassergefährdender Stoffe eingesetzt werden können.

Schließlich soll die bereit zustellende Rohrkupplung an herkömmliche standardisierte Kunststoffrohre, die sich z.B. durch ein hohes Ausmaß an steifer Rohrgeometrie, eine wegen geringen Abriebs bedingte hohe Nutzungsdauer und einen weiten Temperatureinsatzbereich auszeichnen, wie Maincor UltraRib2 Rohre, gekoppelt und kostengünstig verlegt werden.

Die Aufgabe wird gelöst durch den Hauptanspruch und dem Nebenanspruch. Die Unteransprüche betreffen bevorzugte Ausgestaltungen und Weiterentwicklungen der Erfindung.

Die Erfindung betrifft eine Rohrkupplung, welche ein erstes Rohr, vorzugsweise ein zweites Rohr, und eine Muffe umfasst, das erste Rohr, und vorzugsweise das zweite Rohr, sowie die Muffe mit einem thermoplastischen kunststoffartigen Material hergestellt sind, das zweite Rohr mit seinem Spitzende in die Muffe einschiebbbar ist, das zweite Rohr zumindest an der Außenfläche des Spitzendes in Umfangsrichtung sich erstreckende Rippen mit Flanken aufweist, zwischen der Muffe und dem in der Muffe angeordneten Spitzende des zweiten Rohrs zwischen zwei benachbarten Rippen ein Schweißring angeordnet ist, der Schweißring mit einem thermoplastischen kunststoffartigen Werkstoff und einer Einrichtung als elektrische Widerstandsheizung mit Anschlussleitungen ausgebildet ist, welche dadurch gekennzeichnet ist, dass der thermoplastische kunststoffartige Werkstoff des Schweißrings mit dem thermoplastischen kunststoffartigen Material der Rohre und der Muffe übereinstimmt, der Schweißring gegen den oberen Bereich der Flanken der Rippen unter Eigenspannung anliegt, vorzugsweise an Austrittstellen der Anschlussleitungen für den Anschluss an eine Stromquelle der Schweißring durchschnitten oder unterbrochen ist, bevorzugterweise die gegenüber liegenden Schnittenden des Schweißrings im Querschnitt S-förmig unter Bildung eines S-förmigen Spalts ausgebildet sind und elastisch einander anliegen, der Schweißring bevorzugterweise mehrlagig ist, welcher einen Außenmantel und einen Innenmantel mit dem thermoplastischen kunststoffartigen Werkstoff sowie einen zwischen dem Außenmantel und dem Innenmantel angeordneten Zwischenmantel mit der Einrichtung als elektrische Widerstandsheizung umfasst, und die Manteldicke D2 des Innenmantels größer als die Manteldicke D1 des Außenmantels ist.

Ein weiterer Gegenstand der Erfindung betrifft ein Verfahren zur Herstellung einer dauerhaften, belastbaren mediendichten Verschweißung zur Bereitstellung einer längskraftschlüssigen Verbindung eines Rohrs mit einer Muffe mit thermoplastischem kunststoffartigem Material unter Verwendung der Rohrkupplung, wobei
a. ein Schweißring mit einem thermoplastischen kunststoffartigen Werkstoff und einer Einrichtung zur elektrischen Widerstandsheizung in einem oberen, einem Wellental abgewandten Bereich der Flanken von zwei benachbarten Rippen eines Spitzendes des Rohrs angeordnet wird,
b. das Spitzende des Rohrs mit dem Schweißring in die Muffe eingeschoben wird,
c. über nach außen heraus führende Anschlussleitungen der Einrichtung als elektrische Widerstandsheizung ein elektrischer Strom gegeben wird, der die Schweißtemperatur des thermoplastischen kunststoffartigen Werkstoffs des Schweißrings und des thermoplastischen kunststoffartigen Materials erbringt,
d. der thermoplastische kunststoffartige Werkstoff des Schweißrings und das thermoplastische kunststoffartige Material zum Schmelzen gebracht wird zur dauerhaften, belastbaren mediendichten Verschweißung des Rohrs mit der Muffe und dem Schweißring.

Unter mediendichter Verbindung wird im Sinne der Erfindung auch verstanden der Abschluss der Rohre gegenüber Eindringen und / oder Austritt von Medien, wie Gasen, Flüssigkeiten, Lösungen wässriger oder nicht wässriger Zusammensetzung, Abwässer, Wasser oder dergleichen.

Unter Rohre werden im Sinne der Erfindung auch verstanden, Vollwandrohre, gerippte Rohre, gewellte Rohre, Rohre mit Rippen, Doppelwandrohre, Glattwandrohre mit glatter Außenfläche und / oder Innenfläche, usw. oder Kombinationen derselben.

Unter Vollwandrohr wird im Sinne der Erfindung auch verstanden, dass das Rohr mit oder ohne Rippen an seiner Außenfläche seiner Rohrwand ausgeformt ist, wobei die Rippen und / oder die Rohrwand des Rohrs, an welcher die Rippen angeformt sind, keine Hohlräume bilden, sondern deren Innern mit dem thermoplastischen kunststoffartigen Material ausgefüllt ist. Vollwandrohre können auch Doppelwandrohre sein.

Unter einem gerippten Rohr wird im Sinne der Erfindung auch verstanden, dass die Außenfläche des Rohrs geriffelt oder gewellt ist oder zum Beispiel an der Außenfläche der Rohre ringförmige Leisten oder Rippen angeformt sind, wobei die Kopfenden der Leisten einen geringeren Abstand zu der Außenfläche der Rohre aufweisen können als die Kopfenden der Rippen. Die Leisten oder Rippen können im Längsschnitt von unterschiedlicher Geometrie sein; zum Beispiel können die Leisten auch eine Ausgestaltung wie die Rippen aufweisen.

Unter Muffe kann im Sinne der Erfindung auch ein, vorzugsweise hohlzylinderförmiges, Verbindungsstück verstanden werden, durch welches zwei Rohre verbunden werden.

Ein hohlzylinderförmiges Verbindungsstück kann auch ein Rohr, wie ein erstes Rohr, ein zweites Rohr, sein.

So kann das Verbindungsstück an dem einen Ende eines Rohrs, zum Beispiel des ersten Rohrs, zur Aufnahme eines weiteren Rohrs, zum Beispiel des Spitzendes des zweiten Rohrs angeformt sein.

Das Verbindungsstück kann auch eine Doppelsteckmuffe sein. In dieser besonderen Ausgestaltung ist das eine Ende des ersten Rohrs in die Doppelsteckmuffe in deren einen Seite eingeschoben, und in das andere Ende der Doppelsteckmuffe ist das Spitzende des zweiten Rohrs eingeschoben. In dieser Ausgestaltung können sowohl das eine Ende des ersten Rohres wie auch das Spitzende des zweiten Rohres jeweils mindestens einen Schweißring aufweisen.

Ebenso ist es möglich, dass das eine Ende des ersten Rohrs auf die Doppelsteckmuffe auf deren einen Seite aufgeschoben und / oder auf das andere Ende der Doppelsteckmuffe das Spitzende des zweiten Rohrs aufgeschoben sind. In der Ausgestaltung kann die Doppelsteckmuffe an ihren beiden Enden mindestens je zwei Rippen mit jeweils mindestens einem Schweißring aufweisen.

Unter Spitzende wird im Sinne der Erfindung auch das Ende eines Rohrs, zum Beispiel des zweiten Rohres, verstanden.

Unter Sicke wird im Sinne der Erfindung auch verstanden, dass das eine Ende eines Rohrs und / oder einer Muffe innenseitig ringförmig um die Mitte-Längsachse der Rohrs oder der Muffe als Ausnehmung unter Bildung einer Nut ausgeformt ist, um den Schweißring zumindest teilweise in die Nut aufzunehmen oder diesen zu führen.

Die erfindungsgemäße Rohrkupplung umfasst z.B. ein erstes Rohr und z.B. ein zweites Rohr. Das erste Rohr ist zum Beispiel an seinem einen Ende als Muffe ausgebildet. Die Muffe dient zur Aufnahme eines Endes des zweiten Rohrs. Das Ende des zweiten Rohrs wird als Spitzende bezeichnet. Zumindest kann das Spitzende des zweiten Rohrs Rippen aufweisen. An der Außenfläche des Spitzendes des zweiten Rohrs können die Rippen derart an der Außenfläche des zweiten Rohr angeordnet sein, dass sie senkrecht hinsichtlich der Rohrwand oder radial zu der Mitte-Längsachse des Rohrs oder des Spitzendes ausgerichtet sind, so dass zum Beispiel die Mitte-Längsachse des Rohres oder des Spitzendes mit dem Kreismittelpunkt der Rippen übereinstimmt. Ebenfalls können die bogenförmig um die Mitte-Längsachse des Rohrs oder des Spitzendes ausgerichteten Rippen voneinander gleich beabstandet sein. Sie können sich in Umfangsrichtung um die Außenseite der Rohrs oder Spitzendes erstrecken und sind vorzugsweise ringförmig ausgestaltet.

In einer bevorzugten Ausgestaltung der erfindungsgemäßen Rohrkupplung kann die Außenfläche des ersten Rohres durchgehend gerippt sein, So kann die Außenfläche hinsichtlich der Rohrwand senkrechte in einem Abstand voneinander gelegene, sich in Umfangsrichtung erstreckende Rippen aufweisen. Unter Umfangsrichtung oder Umlaufrichtung wird im Sinne der Erfindung auch der Verlauf oder die Anordnung um eine Achse, z.B. eine Mitte-Längsachse, verstanden. So können die Rippen um die Mitte-Längsachse des Rohrs sich kreisbogenförmig erstrecken. Vorzugsweise sind die Rippen ringförmig an die Außenfläche der Rohrwand bzw. des Rohrs angeformt. Ebenso ist es bevorzugt, dass die Rippen gleich voneinander beabstandet sind. Die Rippen können längs der Mitte-Längsachse des ersten Rohres und / oder zweiten Rohrs in Reihe verlaufen oder nur im Bereich der Rohrenden angeordnet sein, um eine einheitliche Rohrsteifigkeit längs der gesamten Rohrlänge oder zum Beispiel in dem der Kopplung zugewandten Bereiche der Rohre hervorzurufen. Die Rippen können zudem unterschiedlichen Abstand A1 zueinander haben. Ganz bevorzugt sind das erste Rohr, die Muffe und / oder zweites Rohr als ein Vollwandrohr oder Doppelwandrohr als geripptes Rohr mit einer Vielzahl an längs der Mitte-Längsachse desselben fortlaufenden Rippen ohne Hohlraum oder Leisten ohne Hohlraum mit oder ohne Erhebungen oder als ungeripptes Rohr mit Rippen oder Leisten mit oder ohne Erhebungen nur im Bereich der Verschweißung. Ebenso bevorzugt sind das erste Rohr, die Muffe und / oder zweites Rohr als geripptes Rohr mit einer Vielzahl an längs der Mitte-Längsachse desselben fortlaufenden hohlkörperförmigen Rippen oder hohlkörperförmigen Leisten mit oder ohne Erhebungen oder als ungeripptes Rohr mit hohlkörperförmigen Rippen oder hohlkörperförmigen Leisten mit oder ohne Erhebungen nur im Bereich der Verschweißung.

Auch das zweite Rohr kann in einer Ausgestaltung der erfindungsgemäßen Rohrkupplung längs der Mitte-Längsachse des zweiten Rohres eine Vielzahl an Rippen aufweisen. Zudem sind an der Außenfläche des zweiten Rohres z.B. hinsichtlich der Rohrwand senkrechte in einem Abstand voneinander gelegene, sich in Umfangsrichtung erstreckende Rippen angeformt, die gleichfalls ringförmig ausgebildet sein können. Auch das zweite Rohr kann als Vollwandrohr ausgebildet sein.

In einer bevorzugten Ausgestaltung der erfindungsgemäßen Rohrkupplung können das erste Rohr und das zweite Rohr ebenso Rippen aufweisen, in deren Innern in Umfangsrichtung sich Hohlräume erstrecken können. In einer weiteren Ausgestaltung können auch die Rippen beider Rohre in Umfangsrichtung sich erstrecken, in einem, vorzugsweise gleichen, Abstand voneinander gelegen und an der Außenfläche des ersten Rohrs und / oder an der Außenfläche des zweiten Rohrs angeformt, vorzugsweise ringförmig um die Mitte-Längsachsen der Rohre ausgerichtet sein. Im Längsschnitt können die Außenseiten der Rippen von unterschiedlichster Geometrie, wie T-förmig-, I-förmig, oval, kreisförmig und / oder V-förmig, sein. Zudem können die Rippen z.B. trapezförmige, viereckige oder kreisförmige Hohlräume haben, die ich in Umfangsrichtung, kreisförmig um die Mitte-Längsachse des Rohrs, durchgehend oder unterbrochen sich erstrecken können. In einer bevorzugten Ausgestaltung können die zwei benachbarten Rippen, gegen welche der Schweißring aufgrund seiner Eigenspannung elastisch mittels einer Federkraft anliegt, am Kopfende teilkreisförmig ausgebildet sein, um die Lagesicherheit des Schweißrings bei Einschub zu unterstützen. Ebenso ist es möglich, dass die Rippen außenseitig im Längsschnitt trapezförmig ausgebildet sind.

In einer bevorzugten Ausgestaltung der erfindungsgemäßen Rohrkupplung können im Längsschnitt gleichfalls an den Flanken der Rippen Erhebungen angeformt sein, die sich über die ganze Länge der Rippen erstrecken können. Die Erhebungen haben eine dem Kopfende der Rippen zugewandte Schulter. Gegen die Schulter der Erhebung liegt der Schweißring an. Die Schulter erstreckt z.B. sich über die gesamte Länge der Erhebung. Die Schulter der Erhebung kann im Längsschnitt parallel zu der Außenfläche des zweiten Rohres ausgerichtet sein. Ebenso ist es möglich, dass die Schulter der Erhebung schräg zu der Flanke der Rippe verläuft und mit der Flanke der Rippe einen Winkel umschließt, der vorzugsweise kleiner als 90° ist. Die Schulter der Erhebung hat einen Abstand von der Außenfläche des zweiten Rohres, der vorzugsweise der Hälfte des Abstandes des Kopfendes der Rippe von der Außenfläche des zweiten Rohres entspricht. Es ist auch möglich, dass der Schweißring in einer Sicke der Muffe geführt ist, um die axiale Führung desselben zu erhöhen.

Hinzukommend können die Flanken der gegenüber liegenden Rippen im Längsschnitt, statt z.B. radial, im rechten Winkel, zu der Mitte-Längsachse des Rohrs ausgebildet, oder V-oder fasenförmig ausgestaltet sein und einen Winkel mit der Mitte-Längsachse von weniger als 90°, vorzugsweise 35° bis 85°, noch mehr bevorzugt 35 bis 75°, einschließen. In einer besonders bevorzugten Ausgestaltung der erfindungsgemäßen Rohrkupplung sind die Rippen, beispielsweise die beiden benachbarten Rippen, gegen welche der Schweißring anliegt, unter Bildung eines o.g. eckigen, in Umfangsrichtung sich erstreckenden Hohlraums mit einem im Längsschnitt viertelkreisförmigen Kopfende ausgestaltet, gegen welches der Schweißring anliegt. Auch kann die der Innenseite der Rohrwand des zweiten Rohrs abgewandte Außenseite der Rippen im Längsschnitt achtelkreisförmig ausgebildet sein, wobei der Schweißring gegen die Außenseite des oberen der Rohrwand des zweiten Rohrs abgewandten Bereichs der Rippen anzuliegen vermag.

Bevorzugterweise sind das erste Rohr mit seiner Muffe und / oder das zweite Rohr mit seiner Muffe einstückig ausgebildet oder zumindest mit einem Ende in eine Doppelsteckmuffe ein- oder auf eine solche aufschiebbar. Zumindest die Innenseite der Muffe ist glattwandig oder glattflächig, um als hinreichende Passfläche eine dauerhafte und mediendichte Verschweißung mit dem Werkstoff des Schweißrings zu ermöglichen. Die Verschweißung der Innenseite als Passfläche der Muffe mit Schweißring und Rippen des Rohrs ist derart einwandfrei, dass keine Schweißstellen unterschiedlicher Dicke auftreten und deren Schweißstellen sich nach Abkühlung im Gegensatz zum Stand der Technik nicht verformen.

Der Schweißring enthält einen thermoplastischen Werkstoff und eine Einrichtung als elektrische Widerstandsheizung. Vorzugsweise umfasst der Schweißring einen Außenmantel mit dem thermoplastischen kunststoffartigen Werkstoff, welcher vorzugsweise mit dem kunststoffartigen Material des zweiten Rohrs, des ersten Rohrs und / oder der Muffe , wie der Doppelsteckmuffe, in Zusammensetzung, physikalischen und / oder thermischen Eigenschaften übereinstimmt. Ebenso kann der kunststoffartige Werkstoff des Schweißrings mit dem thermoplastischen kunststoffartigen Material des ersten Rohres, des zweiten Rohrs und / oder der Muffe, wie Doppelsteckmuffe, übereinstimmen. An der Innenseite des Außenmantels liegt z.B. der Zwischenmantel an, welcher die Einrichtung als elektrische Widerstandsheizung aufnimmt. Die Eigenspannung des Schweißrings, welche die Lage des Schweißrings zwischen den Rippen unterstützt, kann durch seinen elastischen Werkstoff und / oder durch die in dem Schweißring angeordnete oder eingebettete Einrichtung als elektrische Widerstandsheizung hervorgerufen werden. Der Schweißring wird mittels der zwei benachbarten Rippen in Achsenrichtung der Kupplung, wie längs zumindest einer der Mitte-Längsachsen der Rohre, lagesicher gehalten, also verriegelt; die Verriegelung des Schweißrings kann in Längsrichtung der Mitte-Längsachse des Rohrs nicht nur durch die den Schweißring aufgenommenen Rippen ermöglicht sondern auch durch das Anliegen, vorzugsweise durch die Eigenspannung desselben bedingtes Anliegen, des Schweißrings gegen die Rippen unterstützt werden, um die Ausrichtung der Austrittstellen der Anschlussleitungen zur Erleichterung der Benutzung für den Benutzer im Fall des Anschließens der Anschlussleitungen an eine elektrischen Strom liefernde Stromquelle aufrechtzuerhalten.

In einer Ausgestaltung der erfindungsgemäßen Rohrkupplung kann zumindest ein Teil des Schweißrings über das Kopfende benachbarter Rippen überstehen, z.B. unter Bildung eines ringförmigen Ausgleichsraums zwischen dem Wellental benachbarter Rippen und dem Schweißring.

In einer vorteilhaften Ausgestaltung der erfindungsgemäßen Rohrkupplung kann die Einrichtung als elektrische Widerstandsheizung ein vielfach gewickelter metallener Heizdraht sein, z.B. eine Kupfer-Drahtbewicklung, welcher elektrischen Strom leitend ist. Besonders vorteilhaft kann der Heizdraht spiralförmig oder netzförmig in dem thermoplastischen Werkstoff des Außenmantels eingebettet sein und / oder an der Innenseite des Außenmantels aufgebracht sein. Ganz besonders vorteilhaft ist der Heizdraht, welcher wabenartig als Gewebe oder Geflecht verflochten und / oder verpresst sein kann und an der Innenseite des Außenmantels als Zwischenmantel anzuliegen vermag. Ebenso eignen sich in einer weiteren vorteilhaften Ausgestaltung der erfindungsgemäßen Rohrkupplung als elektrische Widerstandsheizung elektrischen Strom leitende, aufheizbare Kunststoffleitungen.

Die Einrichtung als elektrische Widerstandsheizung der erfindungsgemäßen Rohrkupplung dient zum Schmelzen des thermoplastischen kunststoffartigen Werkstoffs des Schweißrings und Verschweißen desselben mit Muffe und dem in die Muffe angeschobenen Rohr bzw. dessen Spitzende. Infolge der Erwärmung des thermoplastischen kunststoffartigen Werkstoffs auf Schweißtemperatur schmilzt der thermoplastische kunststoffartige Werkstoff und verschweißt dauerhaft und mediendicht mit der Innenseite des ersten Rohres bzw. dessen Muffe und der Außenseite bzw. den Rippen des zweiten Rohrs homogen. Die homogene Verschweißung ist innig, so dass das erste Rohr, das zweite Rohr mit der Muffe und dem Schweißring quasi einstückig verschmolzen sind, die Rippen infolge des Erhitzens nicht ausdünnen und der sogenannte Durchbrenneffekt bei den Rippen nicht auftreten kann. Die innige Verschmelzung bzw. Verschweißung von Muffe und Rohr verhindert das Eindringen von Schmutz. Zudem treten durch die einheitliche, gleichmäßige Verschmelzung keine örtlich begrenzten unzureichenden Verschmelzungsfehlstellen auf, so dass das Eindringen von Pflanzenwurzeln wirkungsvoll unterbunden wird.

In einer weiteren Ausgestaltung der erfindungsgemäßen Rohrkupplung, bei welcher der Schweißring zusätzlich einen Innenmantel mit thermoplastischem kunststoffartigen Material enthält, welcher an der Innenseite des Zwischenmantels anliegt, wird bei Erwärmung auf Schweißtemperatur die Verflüssigung des kunststoffartigen Werkstoffs des Außenmantels unterstützt durch Verflüssigung des thermoplastischen kunststoffartigen Werkstoffs des Innenmantels, so dass eine dauerhafte Verschweißung der Muffe, des ersten Rohres mit dem zweiten Rohr in Umfangsrichtung eintritt. Das Rippenmaterial wird erhitzt und mit dem Schweißring und dem ersten Rohr bzw. Muffe verschweißt, wobei die Rippen ihre rohrstabilisierende Steifigkeit im Bereich der Kopplungsstellen oder Verschweißungsstellen beibehalten und keine längskraftschlüssige Verbindungsschwäche aufweisen. Aufgrund der längskraftschlüssigen dauerhaften Verbindung der erfindungsgemäßen Rohrkupplung entstehen auch bei Auftreten von im Untergrund hervorgerufenen Zugkräften keine Spalte und Risse im Bereich der Verschweißung entstehen, so dass die Verbindung sich von dauerhafter Mediendichtigkeit auszeichnet.

Der Schweißring kann einlagig mit der Einrichtung als elektrischen Widerstandsheizung ausgebildet sein. In einer vorteilhaften Ausgestaltung der erfindungsgemäßen Rohrkupplung ist die Mehrlagigkeit des Schweißrings von besonderem Vorteil, welcher vorzugsweise einen Außenmantel und einen Innenmantel mit dem thermoplastischen kunststoffartigen Werkstoff sowie einen zwischen dem Außenmantel und dem Innenmantel angeordneten Zwischenmantel mit der Einrichtung als elektrische Widerstandsheizung und eine Manteldicke D2 des Innenmantels hat, die z.B. größer als die Manteldicke D 1 des Außenmantels ist, um die Dichtigkeit der Verbindung beider Rohre aufrecht zu erhalten, auch wenn infolge von Bodensenkungen auf die Zug- und Schubkräfte auftreten. Durch die erfindungsgemäße Rohrkupplung können Rohr und Muffe auf bei Auftreten von Erddruck oder Verkehrsbelastung nicht auseinander gezogen bzw. an ihrer Verbindung ineinander geschoben werden.

In einer besonders vorteilhaften Ausgestaltung der erfindungsgemäßen Rohrkupplung kann der Schweißring einen Außendurchmesser A, z.B. des Außenmantels, haben, der geringer als der Innendurchmesser J der hohlkörperförmigen Rippen, wobei der Innendurchmesser J der Rippen dem 1,5- bis 3,0-Fachen, oder 2- bis 3-Fachen, vorzugsweise dem 2,2-bis 2,5-Fachen oder 2,0- bis 2,5-Fachen, noch mehr bevorzugt dem 2,2- bis 2,8-Fachen, des Außendurchmessers A des Schweißrings entsprechen kann. Der Außendurchmesser A des Schweißrings 7 kann auch größer als der Abstand A1 der gegenüber liegenden Flanken der die Lage des Schweißrings begrenzenden Rippen oder als deren mittlerer Abstand A1 sein. In einer weiteren Ausführung ist der Außendurchmesser A des Schweißrings größer als das Ausmaß des Umfangs des in Umfangsrichtung sich erstreckenden ringförmigen Wellentals der die Lage des Schweißrings begrenzenden Rippen; zudem kann in einer weiteren Ausgestaltung der Außendurchmesser A des Schweißrings größer als das Ausmaß des Umfangs des in Umfangsrichtung sich erstreckenden ringförmigen Wellentals der die Lage des Schweißrings begrenzenden Rippen und kleiner als das Ausmaß des Umfangs des Kopfendes einer Rippe 6, insbesondere der den Schweißring aufnehmenden bzw. der die Lage des Schweißrings begrenzenden Rippen, sein, so dass der Schweißring auf halber Höhe von Abstand X angeordnet ist. Auch können der Außen-, Innen- und/oder Zwischenmantel z.B. mit einem übereinstimmenden thermoplastischem kunststoffartigen Material hergestellt sein.

In einer weiteren Ausgestaltung der erfindungsgemäßen Rohrkupplung kann die Manteldicke D1 des Außenmantels der Wanddicke D3 der Rippen entsprechen. Es ist bevorzugt, dass der Außendurchmesser A, z.B. des Außenmantels, des Schweißrings größer als der mittlere Abstand A1 der gegenüber liegenden radial sich erstreckenden Flanken der benachbarten Rippen ist und zumindest ein Teil des Schweißrings über das Kopfende der Rippen als Übermaß übersteht, vorzugsweise unter Bildung eines ringförmigen Ausgleichsraums nach Aufschieben des Schweißrings auf das Spitzende des zweiten Rohrs bzw. auf das eine Ende des ersten Rohrs. Unter mittlerem Abstand A1 kann der Abstand zwischen den Flanken der gegenüber stehenden, den Schweißring aufnehmenden bzw. der die Lage des Schweißrings begrenzenden Rippen in halber Höhe des Abstandes X zu verstehen sein. Unter Abstand X kann der Abstand von dem Kopfende der Rippe, z.B. der die Lage des Schweißrings begrenzenden bzw. diesen aufnehmenden Rippen, zu der Außenfläche des Rohrs oder dessen Rohrwand zu verstehen sein. Zudem kann im Längsschnitt der Mittelpunkt des Schweißrings in Höhe der Kopfenden der Rippen angeordnet sein. Die Manteldicke D2 des Innenmantels ist vorteilhafterweise größer als die Manteldicke D1 des Außenmantels und kann das 1,5- bis 3-Fache, vorzugsweise das 2,0- bis 2,5-Fache, noch mehr bevorzugt 2,2- bis 2,5-Fache, der Manteldicke D1 sein, um eine in Umfangsrichtung sich erstreckende flächenmäßige Verschweißung zu ermöglichen.

Der Schweißring ist als ringförmiger Strang ausgebildet, der beispielsweise zwei Schnittenden, z.B. mit stumpfen Enden, aufweist, um den Schweißring unter Aufspreizen desselben auf das Spitzende des zweiten Rohrs aufzuschieben oder aufzubringen. Der Schweißring kann Federeigenschaften haben, so dass er problemlos seine Form beibehält. Nach dem Aufschub auf z.B. das Spitzende des zweiten Rohrs oder das eine Ende des ersten Rohrs legt sich der Schweißring aufgrund seiner Eigenspannung gegen die Rippen an, ebenso können die Schnittenden einander anliegen. Der Schweißring kann fortlaufend oder unterbrochen sich erstrecken. Es ist auch von Vorteil, wenn der Schweißring im Längsschnitt S-förmig ausgebildete Schnittenden mit dem S-förmigen Spalt aufweist. In einer weiteren Ausgestaltung kann der Schweißring im Querschnitt oder in der Draufsicht stumpfe Enden oder S-förmig ausgebildete Schnittenden mit dem S-förmigen Spalt aufweisen, die aufgrund der Eigenspannung des Schweißrings Fläche an Fläche nach dem Aufschub einander anliegen, wobei das eine Schnittende des Schweißrings um einen Betrag vorgreifen, um welchen das andere Schnittende entsprechend zurückversetzt sein können. Diese Ausgestaltung ermöglicht auch eine in Umfangsrichtung sich erstreckende hinreichende Verschmelzung, so dass keine Gefahr des Eindringens und Einwachsens von Pflanzenwurzeln in die Verbindungsstelle beider Rohre besteht und die Rohrkupplung eine ausreichende Wurzelresistenz hat. Ebenso kann der Schweißring stufenförmig im Längsschnitt oder Querschnitt unterbrochen oder durchtrennt sein, wobei dessen Enden so ausgebildet sind, dass die Stufen beider Enden sich gegenseitig über- oder untergreifen. Der Schweißring kann einen Hohlraum 35, der z.B. im Längsschnitt eckig ist, aufweisen. Der Hohlraum kann durchgängig sich entlang des Strangs erstrecken.

Zudem kann der Schweißring in seinem Innern einen Hohlraum aufweisen, der sich fortlaufend oder unterbrochen in Längsrichtung des Strangs des Schweißrings erstrecken kann.

Die Einrichtung als elektrische Widerstandsheizung weist Anschlussleitungen auf, die im Bereich der Schnittenden des Schweißrings aus dem Schweißring herausgeführt werden und in dem Spalt zwischen der Innenseite der Muffe, z.B. des ersten Rohres, und dem Spitzende des zweiten Rohres angeordnet werden können. Die Anschlussleitungen können über Kontaktstifte mit einer Stromquelle verbunden werden, die die Einrichtung als elektrische Widerstandsheizung aufzuheizen vermag. Hinzukommend zeigt es sich, dass der Schweißring bei Erwärmung auf Schweißtemperatur aufgrund seines gleichmäßigen Anliegens zwischen den Rippen und des Hervorstehens zumindest eines Teils desselben über die Kopfenden der Rippen hinaus die Verschweißung mit der Innenseite des ersten Rohrs ohne Durchbrenneffekt wirkungsvoll zu unterstützen vermag.

Vorzugsweise liegt nach dem Aufschieben des Schweißrings auf das Spitzende der Schweißring derart gegen die beiden benachbarten Rippen an, dass zumindest ein Teil des Schweißrings über das Kopfende der Rippen hinausragt unter Bildung eines Ausgleichsraums, der zwischen dem Schweißring und dem zwischen den Rippen befindlichen Wellental angeordnet ist. Infolge der Verschweißung kann das über das Kopfende der Rippen ragende Übermaß des Schweißrings gestaucht oder zusammengedrückt werden. Ebenso wird durch das elastische Anliegen desselben gegen die Innenseite der Muffe und gegen die oberen, der Muffe zugewandten Bereiche der beiden gegenüber liegenden Flanken der Rippen der thermoplastische Werkstoff des Schweißrings mit dem der der Passflächen von Rohr und Muffe innig verschmolzen, so dass die durch die Verschweißung sich einstellende homogene Verbindung der kunststoffartigen Materialien und Werkstoffe sich als eine überaus dauerhafte längskraftschlüssige auszeichnet und gegenüber den im Erdreich, z.B. durch Bergsenkungen bedingten, auftretenden Biege- und Zugkräften entgegenzuwirken vermag, ohne dass Spalte und Risse in der Verbindungsstelle auftreten können.

Das gleichmäßige Anliegen des Schweißrings unter Presskraft aufgrund des Aufbaus des Schweißrings unterstützt so das erwünschte homogene Verschweißen des Schweißrings sowohl mit der Muffe des ersten Rohres als auch mit den Rippen des zweiten Rohres.

Das kunststoffartige Material der Rohre und / oder der kunststoffartige Werkstoff des Schweißrings können zum Beispiel mindestens einen Vertreter der Polypropylen, Polyethylen, deren Derivate umfassenden Gruppe sein. Das thermoplastische kunststoffartige Material des ersten Rohres und / oder des zweiten Rohres und / oder der kunststoffartige Werkstoff des Schweißrings können ebenso herkömmliche geeignete thermoplastische Kunststoffe sein, beispielsweise besonders geeignete Polymermaterialien umfassen, wie olefinisch ungesättigte Polymere und Copolymere, beispielsweise Polyolefine wie Polyethylen, Polypropylen und Polybuten, Ethylen- und Propylen-Copolymere, beispielsweise Ethylenvinylacetatpolymere und Propylenvinylacetatpolymere, halogenierte Vinylpolymere, wie Vinylchloridpolymere und -copolymere, Polyamide, beispielsweise Nylon 6 und Nylon 66, und lonomerpolymere wie Surlyn. Der gewählte Grad des Polyethylens, d.h. hohe Dichte, mittlere Dichte, geringe Dichte oder linear geringe Dichte, hängt von der jeweiligen Anwendung ab. Geeignete Grade von Polyethylen sind beispielsweise Statol 930 (natürlich), Neste NCPE 2600 (natürlich) und Neste NCPE 2467 BL und NCPE 2418. Jeder geeignete äquivalente Grad an Polyethylen kann ebenfalls verwendet werden. Das thermoplastische kunststoffartige Material des ersten Rohres und / oder des zweiten Rohres und / oder der kunststoffartige Werkstoff des Schweißrings können auch herkömmliche geeignete thermoplastische Kunststoffe sein, welche z.B. von einem plastischen kautschukartigen in einen gummielastischen oder unelastischen Zustand nach Verschweißung übergehen können;

Die Verschweißung in der erfindungsgemäßen Rohrkupplung kann nicht die Rohrsteifigkeit durch einheitliche und gleichmäßige Erhitzung des Schweißrings beeinträchtigen; eine hinreichende Elastizität der Schweißstellen, je nach verwendetem Kunststoffmaterial bzw. Werkstoff gegenüber radial einwirkenden Stoßkräften führt nicht zu Undichtigkeiten der Schweißstellen. Vielmehr bleibt die erfindungsgemäße Rohrkupplung dauerhaft dicht gegenüber von außen nach innen drückenden Grundwässern, von innen nach außen drückenden Hochdruckspülungen, und chemisch reaktiven industriellen Abwässern bei langer Nutzungsdauer und starker Beanspruchung.

Da der Schweißring gegen die oberen Bereiche der benachbarten gegenüber stehenden Flanken der Rippen unter Bildung eines Ausgleichsraums anliegt, wird dieser hermetisch durch Verschmelzen der Rippen ohne Durchbrennen derselben mit dem Schweißring verschlossen wird; der Werkstoff kann ggf. hinzutretend gegen die dem Ausgleichsraum gegenüber liegende Innenseite der Muffe gedrückt werden und durch die flächige innige Verschweißung die erwünschte Rohrsteifigkeit der Verbindung der erfindungsgemäßen Rohrkupplung nicht beeinträchtigt werden.

In dem erfindungsgemäßen Verfahren zur Herstellung einer dauerhaften, belastbaren mediendichten Verschweißung hat das zweite Rohr den über sein Spitzende aufgeschobenen Schweißring. Der Schweißring liegt nach dem Aufschieben elastisch gegen die der Rohrwand des zweiten Rohrs abgewandten Bereiche der Flanken von zwei benachbarten Rippen des zweiten Rohrs an, so dass zumindest ein Teil des Schweißrings über das Kopfende der Rippen überstehen kann als sogenanntes Übermaß. Durch das Einschieben des Spitzendes des zweiten Rohrs mit dem Schweißring in die Muffe z.B. des ersten Rohres kann ein Teil des Schweißrings eventuell in Richtung Mitte-Längsachse des zweiten Rohres eingedrückt werden, ohne das elastische Anliegen des Schweißrings gegen die Innenseite der Muffe zu beinträchtigen.

Das elastische Anliegen des Schweißrings sowohl gegen die Innenseite der Muffe des ersten Rohres und gegen die Flanken der beiden benachbarten Rippen unterstützt das homogene flächige Verschmelzen des thermoplastischen kunststoffartigen Werkstoffs des Schweißrings mit dem thermoplastischen kunststoffartigen Material der Rohre bei Beaufschlagen des Schweißrings und dessen Einrichtung als elektrische Widerstandsheizung mit elektrischem Strom, so dass bei der Erwärmung auf Schweißtemperatur die Muffe mit dem Spitzende des zweiten Rohres innig und mechanisch fest verbunden wird. Auch kann der Schweißring formschlüssig gegen die Flanken der bez. seiner Lage seitlich begrenzenden Rippen zum Beispiel mit seinem dem Wellental zugewandten Teil anlegen.

Die Presskräfte des Schweißrings gegen die Innenseite der Muffe wie auch gegen die benachbarten Rippen des zweiten Rohres bewirken eine erwünschte durchgehende Verschweißung in Umfangsrichtung zu den Rippen und der Rohrwand.

Ebenso ist die Verschweißungsstelle in Umfangsrichtung hinreichend innig, so dass die nach Verbau des erfindungsgemäßen Rohrkupplung auftretende Biege- und Zugkräfte im Erdreich nicht zu einer Ablösung oder Undichtigkeit der Verschweißungsstelle führen.

Hinzukommend zeichnet sich die erfindungsgemäße Rohrkupplung durch eine stufenlose Einstellbarkeit der Rohrlängen vor Ort bei Verbau im Erdreich aus, so dass ein umständliches Ausrichten der Rohre zueinander und Ausmessen sich vorteilhafterweise erübrigt, sondern es lediglich der Längenbegrenzung des einzuschiebenden Rohrs und des Einschiebens des Rohres in die Muffe des ersten Rohres und Anlegens eines elektrischen Stroms zur Kunststoffschmelzung bedarf.

Hinzutretend eignet sich die erfindungsgemäße Rohrkupplung für eine kostengünstige und damit wirtschaftliche Verlegung von Kunststoffrohren aus, weil die Bemaßung und Verschweißung vor Ort erfolgen können und die Nutzung von Restlängen ermöglicht wird.

Auch macht die erfindungsgemäße Rohrkupplung die Verlegung mit Verlegekissen, wie Maincor Verlegekissen, z.B. aufgrund Standardisierung der Rohrmaße, möglich, um auch einen darüber hinaus gehenden Schutz der erfindungsgemäßen Rohrkupplung vor mechanischer Beschädigung, wie sie bei Erdarbeiten eintreten können, bereitzustellen.

Ebenso kann die erfindungsgemäße Rohrkupplung an Maincor UltraRib2 Rohre als standardisierte Rohre, die sich durch eine hohes Ausmaß an steifer Rohrgeometrie, durch eine wegen geringen Abriebs bedingte hohe Nutzungsdauer und einen weiten Temperatureinsatzbereich auszeichnen, gekoppelt und kostengünstig verlegt werden.

Ebenfalls benötigt die erfindungsgemäße Rohrkupplung lediglich eine kurze Verschweißzeit, weil aufgrund der besonderen Aufbaus des Schweißrings und dessen optimalen Zusammenwirkens mit Muffe und Rohr bei Verschweißung.

Durch die kurze Verschweißzeit werden die Verlegezeit ebenso verkürzt und die Betriebskosten, wie Personal- und Energiekosten, Betriebsmittel, verringert.

Gleichfalls stellen die erfindungsgemäße Rohrkupplung und das erfindungsgemäße Verfahren keine besonderen Anforderungen an die Fähigkeiten des Benutzers, so dass das Ablängen und das Verlegen vereinfacht werden.

Auch kann die erfindungsgemäße Rohrkupplung unabhängig von den Bodenverhältnissen eingesetzt werden, so dass feuchte, bindige Böden, steile Hanglagen, Gebiete mit hohen Verkehrslasten oder Bergsenkungsgebiete nicht die Einsatzgebiete der erfindungsgemäße Rohrkupplung beschränken.

Aufgrund der dauerhaften Mediendichtigkeit der erfindungsgemäßen Rohrkupplung kann die erfindungsgemäße Rohrkupplung ebenso gut in Wassergewinnungsgebieten als auch zum industriellen Einsatz, z.B. zur Ableitung grundwassergefährdender Stoffe, mit langer Nutzungsdauer eingesetzt werden.

Bei Erstarrung des kunststoffartigen Werkstoffs des Schweißrings zeigt sich hinzutretend, dass der Werkstoff zu einer weiteren Stabilisierung der Verbindungsstelle auch gegenüber senkrecht auf die Verbindungsstelle eintretenden Kräfte durch z.B. teilweise Verfüllung des Ausgleichsraums zwischen Rohrwand und Schweißring führt und die Verschweißungsstelle in hinreichender Weise dauerhaft abdichtet.

Auch ist durch die Verschweißung die Verbindung der Rohre mit der Muffe innig, quasi einstückig, und dauerhaft längskraftschlüssig.

Auch ist die erfindungsgemäße Rohrkupplung auch gegenüber Drücken derart dicht, dass mittels Hochdruckspülverfahren die erfindungsgemäße Rohrkupplung befahren werden können, ohne dass Undichtigkeiten zu beobachten sind.

Da der Schweißring gegen die oberen Bereiche der benachbarten gegenüber stehenden Flanken der Rippen unter Bildung eines Ausgleichsraums anliegt, wird dieser hermetisch durch Verschmelzen der Rippen ohne Durchbrennen derselben mit dem Schweißring verschlossen wird; der Werkstoff kann ggf. hinzutretend gegen die dem Ausgleichsraum gegenüber liegende Innenseite der Muffe gedrückt werden und durch die flächige innige Verschweißung die erwünschte Rohrsteifigkeit der Verbindung der erfindungsgemäßen Rohrkupplung beeinträchtigt werden.

### Ausführungsbeispiele

Die Zeichnungen zeigen vorteilhafte Ausgestaltungen, sowie zweckmäßige Weiterentwicklungen der erfindungsgemäßen Rohrkupplung aufgrund der zeichnerischen Vereinfachung in schematischer, stark vergrößerter Weise ohne Anspruch auf eine maßstabsgetreue Wiedergabe und Ausführungsformen ohne Beschränkung der Erfindung auf diese in
Fig. 1 den Längsschnitt der erfindungsgemäßen Rohrkupplung mit erstem Rohr, Muffe, zweitem Rohr und Schweißring,
Fig. 2 den Längsschnitt der erfindungsgemäßen Rohrkupplung durch das Spitzende des zweiten Rohrs und den dreilagigen Schweißring,
Fig. 3 den Längsschnitt der erfindungsgemäßen Rohrkupplung durch das zweite Rohr und den einlagigen Schweißring,
Fig. 4 den Längsschnitt der erfindungsgemäßen Rohrkupplung durch das zweite Rohr und den dreilagigen Schweißring und
Fig. 5 den Längsschnitt der erfindungsgemäßen Rohrkupplung durch das zweite Rohr und den zweilagigen Schweißring.

Die erfindungsgemäße Rohrkupplung umfasst zumindest ein Rohr 1, 2 , z.B. als geripptes Rohr, und eine Muffe 3.

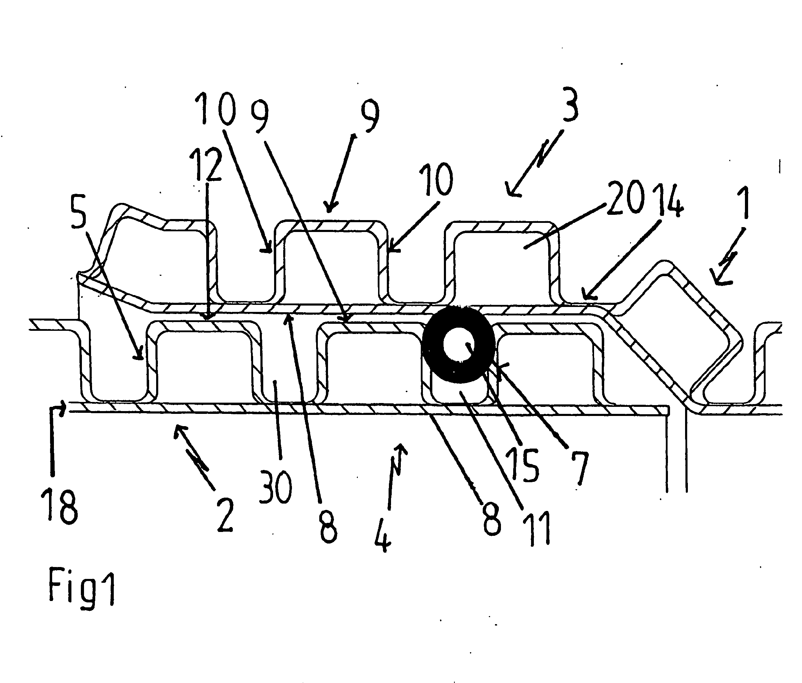

In einem Ausführungsbeispiel umfasst die erfindungsgemäße Rohrkupplung ein zweites Rohr 2 und eine Muffe 3, welche miteinander mit Hilfe des Schweißrings 7 mediendicht verbunden werden. Die Muffe 3 ist als ein Ende eines ersten Rohr 1 ausgebildet sein, wobei das eine Ende des ersten Rohrs 1 sich zu der Muffe 3 erweitert (Fig. 1). Die Muffe 3 dient zur Aufnahme des einen Endes 4, hier Spitzende 4 genannt, des zweiten Rohres 2. Zumindest die Innenseite 8 der Muffe 3 des ersten Rohres 1 ist glattwandig oder glattflächig. Der Innendurchmesser bzw. die lichte Weite der Muffe ist größer als der Außendurchmesser der umlaufenden Kopfenden 12 der Rippen 6 des eingeschobenen Spitzendes des zweiten Rohrs 2, um ein Verkanten beim Einschieben zu vermeiden. An der Außenfläche 5 des ersten Rohres 1 sind Rippen 6 angeformt. Die Rippen 6 sind hohlkörperförmig unter Bildung eines im wesentlichen viereckigen Hohlraums 20. Die Rippen 6 erstrecken sich in Umfangsrichtung und sind mit einem Abstand A1 gleich voneinander beabstandet. Die Rippen 6 sind ringförmig um die Mitte-Längsachse des ersten Rohres 1 bzw. der Muffe 3 angeordnet.

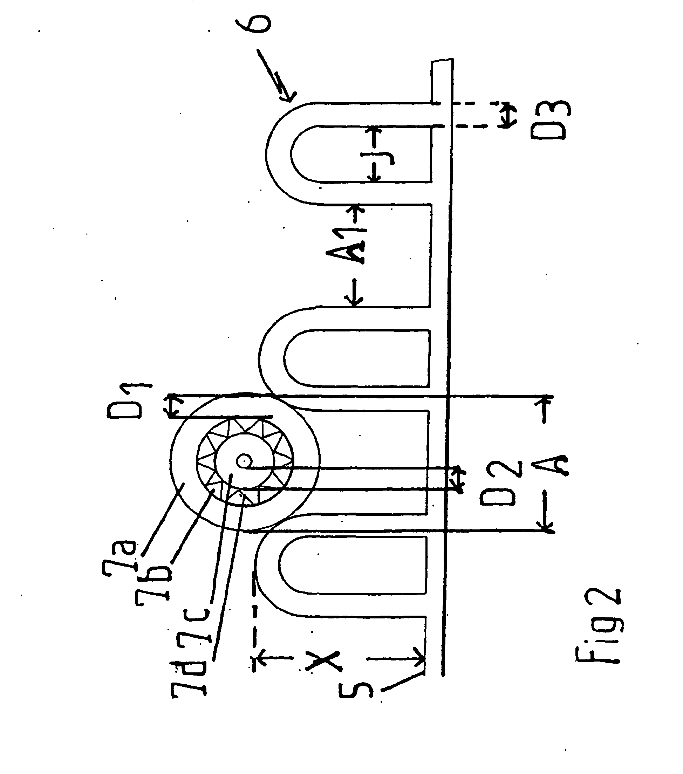

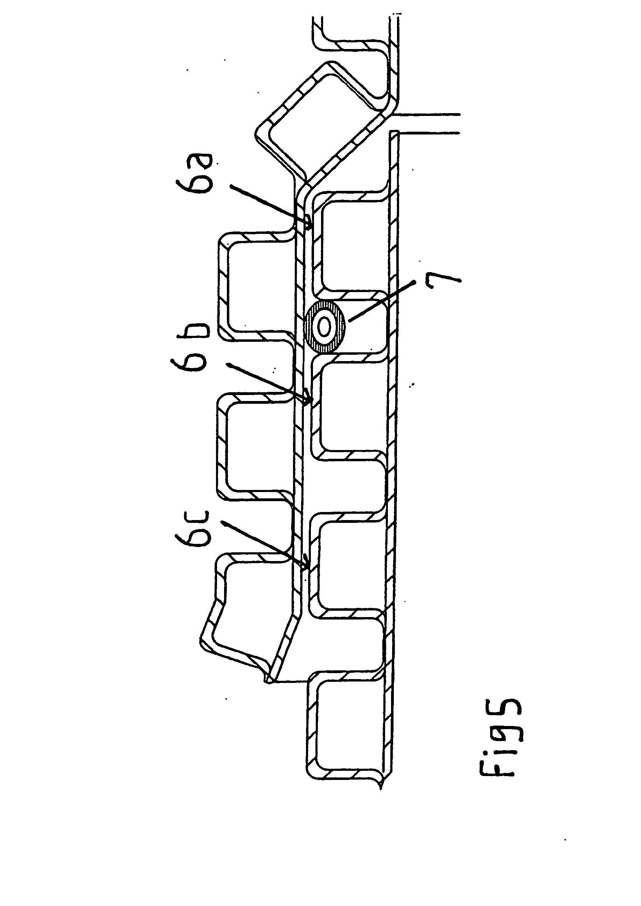

Das Spitzende 4 des zweiten Rohres 2 weist zumindest an seinem vorderen Bereich, welcher in die Muffe 3 eingeschoben ist, mindestens zwei benachbarte ringförmige Rippen 6a, 6b auf. Der Schweißring 7 wird über die der äußersten Spitze des Spitzendes zugewandten Rippe 6a gedehnt werden und zwischen dieser 6a und der in Einschubrichtung des Spitzendes 4 nächst folgenden Rippe 6b angeordnet (Fig. 5). Der Schweißring 7 ist aufgrund der in Richtung längs der Mitte-Längsachse des zweiten Rohrs seitlichen Begrenzung durch die Rippen 6 verriegelt, so dass bei Verschweißung eine axiale Bewegung des Schweißrings unterdrückt wird. Das elastische Anliegen des Schweißrings gegen die Flanken 10 der Rippen 6 verhindert zudem ein Verdrehen desselben um die Mitte-Längsachse, so dass die Anschlussleitungen der Einrichtung 7d zu einer Stromquelle lagesicher in ihrer Position verharren. Diese elastische Verriegelung erleichtert hinzutretend das Anschließen der erfindungsgemäßen Rohrkupplung an eine Stromquelle unter Beibehaltung der Ausrichtung der Anschlussleitungen. In einem weiteren Ausführungsbeispiel wird der Schweißring 7 zwischen die in Einschubrichtung des Spitzendes 4 übernächst folgenden Rippe 6b und der folgenden, drittnächsten Rippen 6c angeordnet (Fig. 2). Die Rippen 6, 6a, 6b, 6c sind derart ausgestaltet, dass der Schweißring 7 gegen die oberen, der Rohrwand 18 des zweiten Rohrs 2 abgewandten Bereiche der gegenüber liegenden Flanken 10 der Rippen 6, insbesondere durch Eigenspannung des Werkstoffs federkraftbeaufschlagt elastisch, aufliegt. Die Federkraftbeaufschlagung kann auch statt der Eigenspannung durch die in dem Schweißring 7 angeordneten federelastischen Heizdrähte 7d hervorgerufen oder zusätzlich die Eigenspannung des Schweißrings 7 unterstützen.

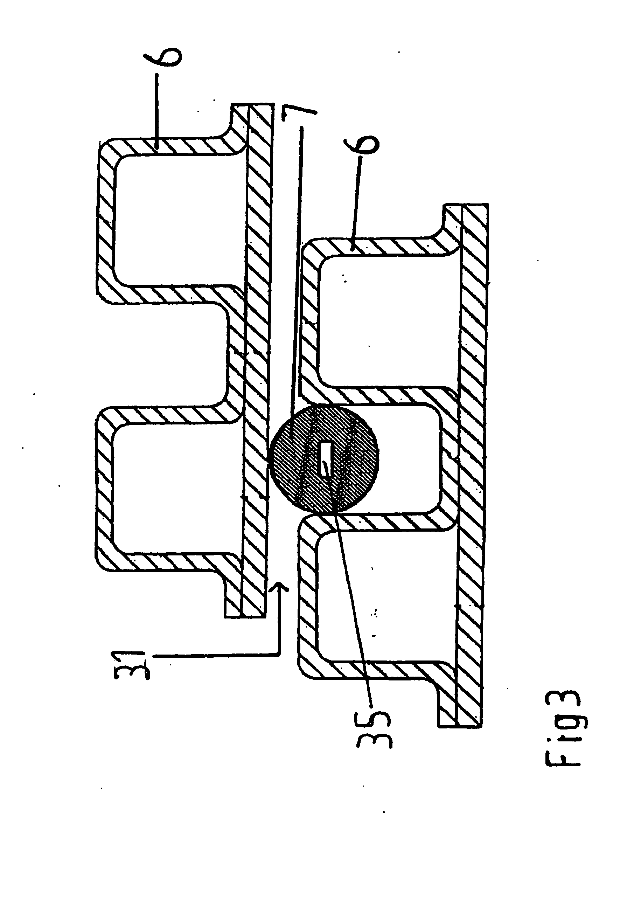

Der Schweißring 7 ist an einer Stelle stumpf unterbrochen; dessen Enden liegen einander an (nicht gezeigt). Der Schweißring 7 kann in einem weiteren Ausführungsbeispiel S-förmig unterbrochen sein mit im Querschnitt mit zwei ineinander greifenden oder flächig einander aufliegenden Schnittenden des Schweißrings 7, die ein Aufspreizen desselben zum Aufschieben des Schweißrings 7 auf das Spitzende 4 erleichtern (nicht gezeigt). Das eine Schnittende des Schweißrings 7 greift um einen Betrag vor, um welchen das andere Schnittende entsprechend zurückversetzt ist. Der Schweißring 7 hat in einem Ausführungsbeispiel einen Hohlraum 35 (Fig. 3).

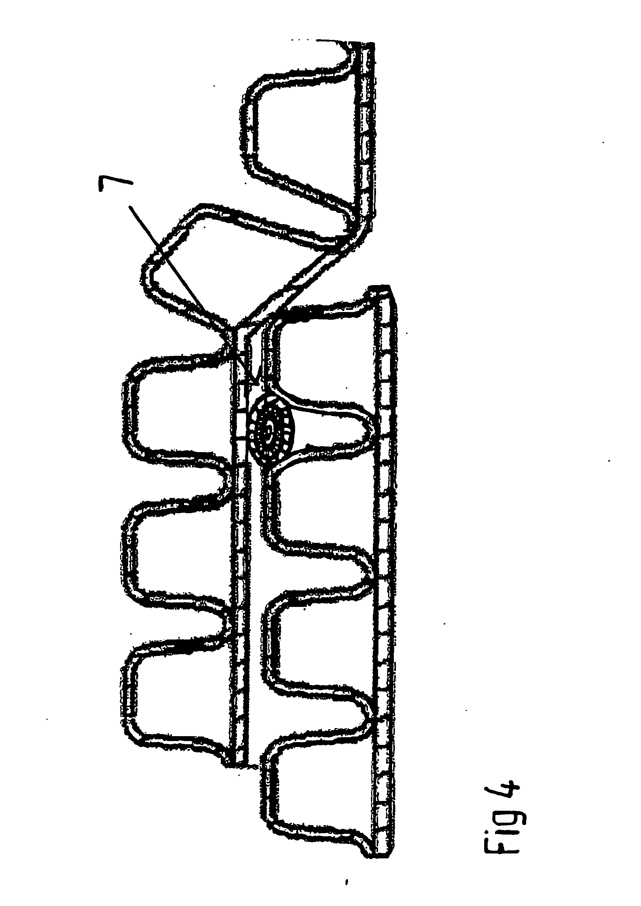

Der Schweißring 7 ragt mit einem Teil (=Übermaß) über das Kopfende 12 der Rippen 6 und deren Außenseiten 9 hinaus, so dass zwischen dem Schweißring 7 und dem Wellental 14 benachbarter Rippen 6, welches sich zwischen den beiden Flanken 10 in dem der Rohrwand 18 zugewandten Bereich befindet, ein Ausgleichsraum 11 ausgebildet ist. Übermäßiges Austreten bei Erwärmung auf Schweißtemperatur beispielsweise durch Auftreten von wulstartigem Austritt von thermoplastischem Werkstoff durch den Ausgleichsraum 11 zwischen dem Schweißring 7 und den Rippen 6 wird verhindert" andererseits wird der Werkstoff gegen die Innenseite 8 der Muffe 4 aufgrund der begrenzten Aufnahmekapazität des Ausgleichsraums 11 und thermischer Ausdehnung des Werkstoffs gepresst. Die infolge des Verschweißens und der Ausdehnung auftretenden Presskräfte bewirken, dass das über das Kopfende 12 der Rippen 6 hinausragende Übermaß des Werkstoffs des Schmelzrings 7 innig gegen die Innenseite 8 der Muffe 3 und den oberen Bereich, der dem Kopfende 12 der Rippen 6 zugewandt ist, der Flanken 10 anliegt (Fig. 4). Zwischen dem Kopfende 12 der Rippen 6 und der Innenseite 8 der Muffe 3 befindet sich ein umlaufender Spalt 31, auch Ringspalt genannt. Durch die umlaufende optimale Verschweißung des Werkstoffs des Schweißrings 7 mit dem Kunststoff der Muffe bzw. mit deren Innenseite 8 und dem Kunststoff der Rippen 6 ist die Verbindung derart innig, dass eine einwandfreie Überbrückung und dauerhafte Abdichtung des Spalts 31 erreicht wird.

Der Schweißring 7 weist eine Einrichtung als elektrische Widerstandsheizung 7d auf. Die Einrichtung als elektrische Widerstandsheizung 7d ist beidseitig von dem thermoplastischen kunststoffartigen Werkstoff ummantelt. Die Einrichtung 7d dient zum Erwärmen des thermoplastischen kunststoffartigen Werkstoffs des Schweißrings 7. Anschlussleitungen von der Einrichtung 7d zu einer Stromquelle (nicht gezeigt) werden in dem Spalt 31 zwischen der Innenseite 8 der Muffe 3 des ersten Rohres 1 und den Kopfenden 12 der Rippen 6 des zweiten Rohrs 2 herausgeführt. Die Anschlussleitungen können an eine Stromquelle angeschlossen werden, um den thermoplastischen kunststoffartigen Werkstoff zu erhitzen und auf Schweiß- bzw. Schmelztemperatur zu bringen (Fig. 3).

In einer weiteren Ausführungsbeispiel (nicht gezeigt) sind im Übergangsbereich zwischen dem Wellental 14 und den Flanken 10 Erhebungen angeformt. Die Erhebungen erstrecken sich in Umfangsrichtung. Die Erhebungen sind ringförmig um die Mitte-Längsachse des zweiten Rohrs 2 ausgerichtet. Jede Erhebungen weist eine Schulter auf, gegen die der Schweißring 7 elastisch anliegt, um das Eindringen des erhitzten Werkstoffs des Schweißrings 7 in den Zwischenraum 30 benachbarter Rippen 6 in Richtung zu der Rohrwand 18 des zweiten Rohrs 2 zu begrenzen. Die Schultern sind ringförmig um die Mitte-Längsachse des zweiten Rohrs 2 ausgerichtet; sie verlaufen in Umfangsrichtung und sind parallel zueinander sowie zu der Rohrwand 18 im Längsschnitt ausgerichtet. An den gegenüber liegenden Flanken 10 von zwei benachbarten Rippen 6 befinden sich gegenüber liegende Schultern der Erhebungen.

In einem weiteren Ausführungsbeispiel (nicht gezeigt) liegt im Längsschnitt der Mittelpunkt des Schweißrings 7 mit seinem Kreismittelpunkt in Höhe der Kopfenden 12 der Rippen 6. In einem weiteren Ausführungsbeispiel entspricht der Außendurchmesser A des Schweißrings 7 dem mittleren Abstand A1 der gegenüber liegenden Flanken 10 (Fig. 3). In einem weiteren Ausführungsbeispiel ist der Außendurchmesser A des Schweißrings 7 größer als der Abstand A1 der gegenüber liegenden Flanken 10 oder als der mittlere Abstand A1. In einem weiteren Ausführungsbeispiel ist der Außendurchmesser A des Schweißrings 7 größer als das Ausmaß des Umfangs des in Umfangsrichtung sich erstreckenden ringförmigen Wellentals 14. Zudem kann in einem weiteren Ausführungsbeispiel der Außendurchmesser A des Schweißrings 7 größer als das Ausmaß des Umfangs des in Umfangsrichtung sich erstreckenden ringförmigen Wellentals 14 und kleiner als das Ausmaß des Umfangs des Kopfendes einer Rippe 6, insbesondere der den Schweißring aufnehmenden Rippen 6a, 6b, sein, so dass der Schweißring 7 auf halber Höhe von Abstand X angeordnet ist.

Der mittlere Abstand A1 ist die Entfernung der Flanken 10 der gegenüber stehenden, den Schweißring 7 aufnehmenden Rippen 6 in halber Höhe des Abstandes X verstanden. Der Abstand X entspricht der Entfernung des Kopfendes 12 der Rippe 6, 6a, 6b zu der Außenfläche 5 der Rohrwand 18 des Rohrs 1, 2 oder zu dem Wellental 14. Die Manteldicke D1 des Außenmantels 7a entspricht der Wanddicke D3 der Rippen 6, 6a, 6b. Die Manteldicke D2 des Innenmantels 7c ist gleich oder größer als die Manteldicke D1 des Außenmantels 7a. Der Innendurchmesser J der hohlkörperförmigen Rippen 6, 6a, 6b ist 2 oder 3mal größer als Außendurchmesser A des Schweißrings 7.

Bei Anschließen der Einrichtung als Widerstandsheizung an eine Stromquelle erwärmt sich der kunststoffartige thermoplastische Werkstoff des Schweißrings 7 auf Schweißtemperatur und verbindet sich innig mit dem thermoplastischen kunststoffartigen Material sowohl der Muffe 3 wie auch der Rippen 6 des zweiten Rohres 2. Die Einrichtung als elektrische Widerstandsheizung ist ein elektrischen Strom leitender Heizdraht, der netzartig oder mäanderförmig in dem Schweißring in Umfangsrichtung in Kupferdrahtausführung angeordnet ist. In einem weiteren Ausführungsbeispiel kann der Schweißring 7 aus einem Außenmantel 7a mit kunststoffartigen thermoplastischen Werkstoff, einem Zwischenmantel 7b mit der Einrichtung als elektrische Widerstandsheizung 7d und einem Innenmantel 7c mit gleichfalls einem thermoplastischen kunststoffartigen Werkstoff hergestellt sein.

In einem weiteren Ausführungsbeispiel umfasst die erfindungsgemäße Rohrkupplung ein zweites Rohr 2 mit einem Spitzende und Rippen 6 sowie ein erstes Rohr 1, dessen Ende das Spitzende des zweiten Rohrs aufnimmt. Der Innendurchmesser bzw. die lichte Weite des Endes des zweiten Rohr 2 kann der einer Muffe entsprechen, ist größer als der Außendurchmesser der umlaufenden Kopfenden 12 der Rippen des eingeschobenen zweiten Rohrs, um ein Verkanten beim Einschiebnen zu vermeiden.

In einem weiteren Ausführungsbeispiel umfasst die erfindungsgemäße Rohrkupplung die Muffe 3 als Doppelsteckmuffe, in deren Enden auf der eine Seite das eine Ende des ersten rippenförmigen Rohrs 1 und das Spitzende 4 des zweiten rippenförmigen Rohrs 2 eingeschoben ist. Das eine Ende des ersten Rohrs 1 hat zwischen den ringförmigen Rippen6 mindestens einen Schweißring 7. Auch das Spitzende 4 des zweiten Rohrs 2 hat mindestens einen Schweißring 7 zwischen den Rippen 6. Die Verschweißung der Schweißringe 7 mit der Muffe 7 als Doppelsteckmuffe und den Rohren 1, 2 erfolgt wie bereits oben ausgeführt.

Die erfindungsgemäße Rohrkupplung ermöglicht eine dauerhafte und belastbare mediendichte Verschweißung des ersten Rohres 1 mit dem zweiten Rohr 2.

Durch die erfindungsgemäße Rohrkupplung wird eine hinreichend flächige Verschweißung beider Rohre 1, 2 miteinander ermöglicht, so dass die häufig auftretenden Biegekräfte und Zugkräfte kein Ablösen der Rohre voneinander im Bereich der Verschweißungsstelle hervorrufen können.

Ebenso zeigt sich, dass durch die erfindungsgemäße Rohrkupplung die Verschweißungsstelle hinreichend widerstandsfähig ist gegenüber senkrecht auf die Mitte-Längsachse der Rohre einwirkenden Kräfte, die beispielsweise durch Verkehrslasten bewirkt werden.

Ebenfalls kann sich die erfindungsgemäße Rohrkupplung von Vorteil erweisen durch zum Beispiel
stufenloses Einstellen der Längen der Rohre der miteinander zu verbindenden Rohre,
einfache Montage vor Ort,
hinreichende Schlagfestigkeit,
Fehlen sogenannten Durchbrenneffekts bei den Rippen,
rohrstabilisierende Steifigkeit im Bereich der Kopplungsstelle beider Rohre, Fehlen längskraftschlüssiger Verbindungsschwäche,
Vermeidung des Eindringens und Einwachsens von Pflanzenwurzeln in die Verbindungsstelle beider Rohre,
keine Undichtigkeit bei infolge von Bodensenkungen auftretenden Zug- und Schubkräften,
kostengünstige, wirtschaftliche Verlegung von Kunststoffrohren,
Bemaßung und Verschweißung vor Ort,
Nutzung von Rohrrestlängen,
Verlegung mit Verlegekissen, wie Maincor Verlegekissen,
Kopplung an Maincor UltraRib2 Rohre als standardisierte Rohre, kurze Verschweißzeit,
Verkürzung von Verlegezeit,
geringe Betriebskosten,
hohes Maß an Einsatzbreite, wie Unabhängigkeit von Böden, Hanglagen, Gebiete hoher Verkehrslasten, Bergsenkungsgebiete,
Einsatz in Wassergewinnungsgebieten,
industriellen Einsatz,
Befahrbarkeit mit Hochdruckspülverfahren.

## Patentansprüche

1. Rohrkupplung, welche ein Rohr (1, 2) und eine Muffe (3) umfasst, das Rohr (1, 2) und die Muffe (3) mit einem thermoplastischen kunststoffartigen Material hergestellt sind, das Rohr (1, 2) mit seinem Spitzende (4) in die Muffe (3) einschiebbbar ist, das Rohr (1, 2) zumindest an der Außenfläche (5) des Spitzendes (4) in Umfangsrichtung sich erstreckende Rippen (6) mit Flanken (10) aufweist,
zwischen der Muffe (3) und dem in der Muffe (3) eingeschobenen Spitzende (4) des Rohrs (1, 2) zwischen zwei benachbarten Rippen (6) ein Schweißring (7) angeordnet ist, der Schweißring (7) mit einem thermoplastischen kunststoffartigen Werkstoff und einer Einrichtung als elektrische Widerstandsheizung (7d) mit Anschlussleitungen ausgebildet ist,
**dadurch gekennzeichnet, dass**
der thermoplastische kunststoffartige Werkstoff des Schweißrings (7) mit dem thermoplastischen kunststoffartigen Material des Rohrs (1, 2) und der Muffe (3) übereinstimmt,
der Schweißring (7) gegen den oberen Bereich der Flanken (10) der Rippen (6) mittels Eigenspannung anliegt, der Schweißring (7) an Austrittsstellen der Anschlussleitungen für den Anschluss an eine Stromquelle durchschnitten ist, die gegenüber liegenden Schnittenden des Schweißrings (7) im Querschnitt S-förmig unter Bildung eines S-förmigen Spalts ausgebildet sind und elastisch einander mittels Eigenspannung anliegen,
und der Schweißring (7) mehrlagig ist, welcher einen Außenmantel (7a) und einen Innenmantel (7c) mit dem thermoplastischen kunststoffartigen Werkstoff sowie einen zwischen dem Außenmantel (7a) und dem Innenmantel (7c) angeordneten Zwischenmantel (7b) mit der Einrichtung als elektrische Widerstandsheizung (7d) umfasst, die Manteldicke D2 des Innenmantels (7c) größer als die Manteldicke D 1 des Außenmantels (7a) ist.

2. Rohrkupplung nach Anspruch 1, **dadurch gekennzeichnet, dass** der Schweißring (7) elastisch mittels der zwei benachbarten Rippen (6) in Achsenrichtung der Kupplung verriegelt ist.

3. Rohrkupplung nach Anspruch 1 oder 2, **dadurch gekennzeichnet, dass** die Rohrkupplung mindestens zwei Rohre (1, 2), die ein erstes Rohr (1) und ein zweites Rohr (2) umfassen, und eine Muffe aufweist, wobei an das erste Rohr (1) die Muffe (3) angeformt ist.

4. Rohrkupplung nach mindestens einem der vorhergehenden Ansprüche, **dadurch gekennzeichnet, dass** die Muffe (3) als Doppelsteckmuffe ausgebildet ist, in welche das eine Ende des ersten Rohrs (1) und das Spitzende (4) des zweiten Rohrs (2) einschiebbar sind, das eine Ende des ersten Rohrs (1) mindestens einen Schweißring (7) und das Spitzende (4) des zweiten Rohrs (2) mindestens einen Schweißring (7) aufweisen, das erste Rohr (1) mit seinem einen Ende in die Muffe (3) einschiebbbar ist, das erste Rohr (1) zumindest an der Außenfläche (5) des einen Endes in Umfangsrichtung sich erstreckende Rippen (6) mit Flanken aufweist.

5. Rohrkupplung nach mindestens einem der vorhergehenden Ansprüche, **dadurch gekennzeichnet, dass** das erste Rohr (1) an einem Ende als Muffe (3) ausgebildet ist.

6. Rohrkupplung nach mindestens einem der vorhergehenden Ansprüche, **dadurch gekennzeichnet, dass** zumindest die dem Schweißring (7) gegenüber liegende Innenseite (8) der Muffe (3) glattwandig ist.

7. Rohrkupplung nach mindestens einem der vorhergehenden Ansprüche, **dadurch gekennzeichnet, dass** der Schweißring (7) in einer Sicke der Muffe (3) geführt ist.

8. Rohrkupplung nach mindestens einem der vorhergehenden Ansprüche, **dadurch gekennzeichnet, dass** die Rippen (6) hohlkörperförmig, vorzugsweise trapezförmig, ausgebildet sind.

9. Rohrkupplung nach mindestens einem der vorhergehenden Ansprüche, **dadurch gekennzeichnet, dass** der elastische Schweißring (7) zwischen der in Einschubrichtung des Spitzendes (4) übernächst folgenden Rippe (6) und der drittnächsten Rippen (6) angeordnet ist.

10. Rohrkupplung nach mindestens einem der vorhergehenden Ansprüche, **dadurch gekennzeichnet, dass** die Flanken (10) der gegenüber liegenden Rippen (6) im Längsschnitt fasenförmig ausgebildet sind und einen Winkel von weniger als 90⁰ einschließen, zumindest ein Teil des Schweißrings (7) über das Kopfende (12) der Rippen (6) übersteht unter Bildung eines ringförmigen Ausgleichsraums (11) nach Aufschub des Schweißrings (7) auf das Spitzende des zweiten Rohrs (2).

11. Rohrkupplung nach mindestens einem der vorhergehenden Ansprüche, **dadurch gekennzeichnet, dass** die Einrichtung als elektrische Widerstandsheizung
durch einen vielfach gewickelten elektrischen Strom leitenden metallenen Heizdraht ausgebildet ist.

12. Rohrkupplung nach mindestens einem der vorhergehenden Ansprüche, **dadurch gekennzeichnet, dass** das kunststoffartige Material der Rohre (1, 2) und der kunststoffartige Werkstoff des Schweißrings (7) mindestens einen Vertreter der Polypropylen und Polyethylen umfassenden Gruppe enthält.

13. Rohrkupplung nach mindestens einem der vorhergehenden Ansprüche, **dadurch gekennzeichnet, dass** an den Flanken (10) der Rippen Erhebungen sich anschließen, die sich über die ganze Länge der Rippen (6) erstrecken, die Erhebungen Schultern aufweisen, gegen welche der Schweißring (7) elastisch anliegt, vorzugsweise die Schultern im Längsschnitt parallel zu der Mitte-Längsachse und / oder der Außenfläche (5) der Rohre (1, 2) ausgerichtet sind und die Schultern sich im Umfangsrichtung erstrecken und der Abstand der Schultern zu der Außenfläche (5) der Rohre (1, 2) der Hälfte des, vorzugsweise mittleren, Abstands (X) zwischen dem Kopfende (12) der Rippen (6) zu der Außenfläche (5) der Rohre (1, 2) entspricht.

14. Verfahren zur Herstellung einer dauerhaften, belastbaren mediendichten Verschweißung zur Bereitstellung einer längskraftschlüssigen Verbindung eines Rohrs (1, 2) mit einer Muffe (3) mit dem thermoplastischen kunststoffartigen Material unter Verwendung der Rohrkupplung nach mindestens einem der vorhergehenden Ansprüche, wobei
a. der Schweißring (7) mit einem thermoplastischen kunststoffartigen Werkstoff und einer Einrichtung zur elektrischen Widerstandsheizung (7d) in einem oberen, einem Wellental (14) abgewandten Bereich der Flanken (10) von zwei benachbarten Rippen (6) des Rohrs (1, 2) angeordnet wird,
b. das Spitzende (4) des Rohrs (1, 2) mit dem Schweißring (7) in die Muffe (3) eingeschoben wird,
c. über nach außen heraus führende Anschlussleitungen der Einrichtung als elektrische Widerstandsheizung (7d) ein elektrischer Strom gegeben wird, der die Schweißtemperatur des thermoplastischen kunststoffartigen Werkstoffs des Schweißrings (7) und des thermoplastischen kunststoffartigen Materials erbringt,
d. der thermoplastische kunststoffartige Werkstoff des Schweißrings (7) und das thermoplastische kunststoffartige, Material zum Schmelzen gebracht wird zur dauerhaften, belastbaren mediendichten Verschweißung des Rohrs (1, 2) mit der Muffe (3) und dem Schweißring (7).

## Claims

1. A pipe coupling, comprising a pipe (1, 2) and a sleeve (3), the pipe (1, 2) and the sleeve (3) are manufactured with a thermoplastic plastic-type material, the pipe (1, 2) can be pushed with its spigot (4) into the sleeve (3), the pipe (1, 2) has, at least on the outer surface (5) of the spigot (4), ribs (6), which extend in the circumferential direction, with flanks (10), a welding ring (7) is arranged between the sleeve (3) and the spigot (4), pushed-in in the sleeve (3), of the pipe (1, 2) between two adjacent ribs (6), the welding ring (7) is formed with a thermoplastic plastic-type material and an apparatus as an electric resistance heater (7d) with connection lines,
**characterised in that** the thermoplastic plastic-type material of the welding ring (7)
corresponds to the thermoplastic plastic-type material of the pipe (1, 2) and the sleeve (3), the welding ring (7) bears against the upper region of the flanks (10) of the ribs (6) by means of internal stress,
the welding ring (7) is cut through at outlet points of the connection lines for the connection to a
power source, the opposing cut ends of the welding ring (7) are formed S-shaped in cross-section while forming an S-shaped gap and bear elastically on one another by means of internal stress,
and the welding ring (7) is multi-layered, which comprises an outer casing (7a) and an inner
casing (7c) with the thermoplastic plastic-type material as well as an intermediate casing (7b) arranged between the outer casing (7a) and the inner casing (7c) with the apparatus as an electric resistance heater (7d), the casing thickness D2 of the inner casing (7c) is greater than the casing thickness D 1 of the outer casing (7a).

2. The pipe coupling according to Claim 1, **characterised in that** the welding ring (7) is locked elastically by means of the two adjacent ribs (6) in the axial direction of the coupling.

3. The pipe coupling according to Claim 1 or 2, **characterised in that** the pipe coupling has at least two pipes (1, 2), which comprise a first pipe (1) and a second pipe (2), and a sleeve, wherein the sleeve (3) is formed onto the first pipe (1).

4. The pipe coupling according to at least one of the preceding claims, **characterised in that** the sleeve (3) is formed as a double connection sleeve into which one end of the first pipe (1) and the spigot (4) of the second pipe (2) can be pushed in, one end of the first pipe (1) has at least one welding ring (7) and the spigot (4) of the second pipe (2) has at least one welding ring (7), the first pipe (1) can be pushed with its one end into the sleeve (3), the first pipe (1) has, at least on the outer surface (5) of one end, ribs (6), which extend in the circumferential direction, with flanks.

5. The pipe coupling according to at least one of the preceding claims, **characterised in that** the first pipe (1) is formed at one end as a sleeve (3).

6. The pipe coupling according to at least one of the preceding claims, **characterised in that** at least the inside (8) of the sleeve (3) opposite the welding ring (7) is smooth-walled.

7. The pipe coupling according to at least one of the preceding claims, **characterised in that** the welding ring (7) is guided in a corrugation of the sleeve (3).

8. The pipe coupling according to at least one of the preceding claims, **characterised in that** the ribs (6) are formed hollow body-shaped, preferably trapezoidal.

9. The pipe coupling according to at least one of the preceding claims, **characterised in that** the elastic welding ring (7) is arranged between the one-after-next rib (6) in the push-in direction of the spigot (4) and the third-next ribs (6).

10. The pipe coupling according to at least one of the preceding claims, **characterised in that** the flanks (10) of the opposite ribs (6) are formed bevel-shaped in the longitudinal section and enclose an angle of less than 90°, at least a part of the welding ring (7) projects beyond the head end (12) of the ribs (6) while forming an annular equalisation space (11) after the welding ring (7) is pushed onto the spigot of the second pipe (2).

11. The pipe coupling according to at least one of the preceding claims, **characterised in that** the apparatus is formed as an electric resistance heater by a multiply wound metal heating wire which conducts electric current.

12. The pipe coupling according to at least one of the preceding claims, **characterized in that** the plastic-type material of the pipes (1, 2) and the plastic-type material of the welding ring (7) contains at least one representative from the group including polypropylene and polyethylene.

13. The pipe coupling according to at least one of the preceding claims, **characterised in that** elevations adjoin the flanks (10) of the ribs, which elevations extend across the entire length of the ribs (6), the elevations have shoulders, against which shoulders the welding ring (7) elastically bears, preferably the shoulders are aligned in the longitudinal section parallel to the central longitudinal axis and/or the outer surface (5) of the pipes (1, 2) and the shoulders extend in the circumferential direction and the distance from the shoulders to the outer surface (5) of the pipes (1, 2) corresponds to half of the, preferably central, distance (X) between the head end (12) of the ribs (6) and the outer surface (5) of the pipes (1, 2).

14. A method for manufacturing a long-lasting, resilient media-proof welding to provide a longitudinally non-positive connection of a pipe (1, 2) to a sleeve (3) with the thermoplastic plastic-type material using the pipe coupling according to at least one of the preceding claims, wherein
a. the welding ring (7) with a thermoplastic plastic-type material and an apparatus for the electric resistance heater (7d) is arranged in an upper region of the flanks (10), facing away from a wave trough (14), of two adjacent ribs (6) of the pipe (1, 2),
b. the spigot (4) of the pipe (1, 2) is pushed with the welding ring (7) into the sleeve (3),
c. an electric current is supplied via connection lines, which lead to the outside, of the apparatus as an electric resistance heater (7d), which current provides the welding temperature of the thermoplastic plastic-type material of the welding ring (7) and of the thermoplastic plastic-type material,
d. the thermoplastic plastic-type material of the welding ring (7) and the thermoplastic plastic-type material is smelted for long-lasting, resilient media-proof welding of the pipe (1, 2) to the sleeve (3) and the welding ring (7).

## Revendications

1. Raccord de tuyau qui comprend un tube (1, 2) et un manchon (3), le tuyau (1, 2) et le manchon (3) étant fabriqués à partir d'une matière thermoplastique d'aspect synthétique, le tuyau (1, 2) pouvant être glissé, par son bout pointu (4), à l'intérieur du manchon (3) et le tuyau (3) présentant, au moins sur la surface externe (5) du bout pointu (4), des nervures (6) avec des flancs (10) lesquelles nervures s'étendent dans le sens circonférentiel,
un anneau de soudage (7) étant disposé entre le manchon (3) et le bout pointu (4) du tuyau (1, 2) glissé à l'intérieur du manchon (3), entre deux nervures adjacentes (6), l'anneau de soudage (7) étant formé d'une matière thermoplastique d'aspect synthétique et d'un dispositif en tant que chauffage à résistance électrique (7d) avec des lignes de raccordement,
**caractérisé en ce que** :
la matière thermoplastique d'aspect synthétique de l'anneau de soudage (7) correspond à la matière thermoplastique d'aspect synthétique du tuyau (1, 2) et du manchon (3),
l'anneau de soudage (7) est joint à la zone supérieure des flancs (10) des nervures (6) au moyen de sa contrainte résiduelle, **en ce que** l'anneau de soudage (7) est découpé, au niveau de points de sortie des lignes de raccordement, pour le raccordement à une source de courant, **en ce que** les extrémités de découpe de l'anneau de soudage (7), opposées l'une à l'autre, présentent une coupe transversale en forme de S en formant ainsi une fente en forme de S et sont jointes l'une à l'autre, de manière élastique, au moyen leur contrainte résiduelle, et
l'anneau de soudage (7) est multicouche, comprenant une gaine externe (7a) et une gaine interne (7c) de la matière thermoplastique d'aspect synthétique ainsi qu'une gaine intermédiaire (7b) disposée entre la gaine externe (7a) et la gaine interne (7c) avec le dispositif en tant que chauffage à résistance électrique (7d), l'épaisseur D2 de la gaine interne (7c) étant supérieure à l'épaisseur D1 de la gaine externe (7a).

2. Raccord de tuyau selon la revendication 1, **caractérisé en ce que** l'anneau de soudage (7) est verrouillé de manière élastique, par les deux nervures adjacentes (6), dans le sens axial du raccord.

3. Raccord de tuyau selon la revendication 1 ou 2, **caractérisé en ce que** le raccord de tuyau présente au moins deux tuyaux (1, 2), qui comprennent un premier tuyau (1) et un deuxième tuyau (2), et un manchon, dans lequel le manchon (3) est moulé sur le premier tuyau (1).

4. Raccord de tuyau selon au moins l'une quelconque des revendications précédentes, **caractérisé en ce que** le manchon (3) se présente sous la forme d'un manchon-raccord double, à l'intérieur duquel la première extrémité du premier tuyau (1) et le bout pointu (4) du deuxième tuyau (2) peuvent être glissés, **en ce que** la première extrémité du premier tuyau (1) présente au moins un anneau de soudage (7) et le bout pointu (4) du deuxième tuyau (2) présente au moins un anneau de soudage (7), **en ce que** le premier tuyau (1) peut être glissé, par sa première extrémité, à l'intérieur du manchon (3) et **en ce que** le premier tuyau (1) présente, au moins sur la surface externe (5) de la première extrémité, des nervures (6) avec des flancs (10), lesquelles nervures s'étendent dans le sens circonférentiel.

5. Raccord de tuyau selon au moins l'une quelconque des revendications précédentes, **caractérisé en ce que** le premier tuyau (1) est constitué, à une extrémité, en forme de manchon (3).

6. Raccord de tuyau selon au moins l'une quelconque des revendications précédentes, **caractérisé en ce qu'**au moins la face interne (8) du manchon (3) opposée à l'anneau de soudage (7) a une paroi lisse.

7. Raccord de tuyau selon au moins l'une quelconque des revendications précédentes, **caractérisé en ce que** l'anneau de soudage (7) est guidé dans une rainure du manchon (3).

8. Raccord de tuyau selon au moins l'une quelconque des revendications précédentes, **caractérisé en ce que** les nervures (6) se présentent sous la forme de corps creux, de préférence de forme trapézoïdale.

9. Raccord de tuyau selon au moins l'une quelconque des revendications précédentes, **caractérisé en ce que** l'anneau de soudage élastique (7) est disposé, dans le sens de l'emboîtement du bout pointu (4), entre la seconde nervure suivante (6) et la troisième nervure suivante (6).

10. Raccord de tuyau selon au moins l'une quelconque des revendications précédentes, **caractérisé en ce que** les flancs (10) des nervures (6), opposées l'une à l'autre, présentent une coupe longitudinale en forme de chanfrein et renferment un angle de moins de 90°, **en ce qu'**au moins une partie de l'anneau de soudage (7) dépasse de l'extrémité de tête (12) des nervures (6) en formant un espace de compensation annulaire (11) après enfilement de l'anneau de soudage (7) sur le bout pointu du deuxième tuyau (2).

11. Raccord de tuyau selon au moins l'une quelconque des revendications précédentes, **caractérisé en ce que** le dispositif en tant que chauffage à résistance électrique se présente sous la forme d'un fil de chauffage métallique conducteur du courant électrique, embobiné de multiples fois.

12. Raccord de tuyau selon au moins l'une quelconque des revendications précédentes, **caractérisé en ce que** la matière d'aspect synthétique des tuyaux (1, 2) et la matière d'aspect synthétique de l'anneau de soudage (7) contiennent au moins un représentant du groupe comprenant le polypropylène et le polyéthylène.

13. Raccord de tuyau selon au moins l'une quelconque des revendications précédentes, **caractérisé en ce que** des zones élevées se rallient aux flancs (10) des nervures et s'étendent sur toute la longueur des nervures (6), **en ce que** les zones surélevées présentent des épaulements auxquels l'anneau de soudage (16) se joint de manière élastique, **en ce que**, de préférence, les épaulements sont orientés, en coupe longitudinale, parallèlement à l'axe longitudinal central et/ou à la surface externe (5) des tuyaux (1, 2) et **en ce que** les épaulements s'étendent dans le sens circonférentiel, la distance des épaulements à la surface externe (5) des tuyaux (1, 2) correspondant à la moitié de la distance (X) de préférence moyenne entre l'extrémité de tête (12) des nervures (6) et la surface externe (5) des tuyaux (1, 2).

14. Procédé de préparation d'un soudage durable, résistant et étanche au milieu pour préparer une liaison par la force longitudinale d'un tuyau (1, 2) avec un manchon (3) de la matière thermoplastique d'aspect synthétique en utilisant le raccord de tuyau selon au moins l'une des revendications précédentes, dans lequel :
a. l'anneau de soudage (7) d'une matière thermoplastique d'aspect synthétique et avec un dispositif de chauffage à résistance électrique (7d) est disposé dans une zone supérieure des flancs (10), opposée à un creux (14) de deux nervures adjacentes (6) du tuyau (1, 2),
b. le bout pointu (4) du tuyau (1, 2) est glissé, avec l'anneau de soudage (7), à l'intérieur du manchon (3),
c. par le biais de lignes de raccordement du dispositif en tant que chauffage à résistance électrique (7d) qui conduisent vers l'extérieur, du courant électrique est produit, qui fournit la température de soudage de la matière
thermoplastique d'aspect synthétique de l'anneau de soudage (7) et de la matière thermoplastique d'aspect synthétique,
d. la matière thermoplastique d'aspect synthétique de l'anneau de soudage (7) et la matière thermoplastique d'aspect synthétique sont amenées à fusion pour obtenir un soudage du tuyau avec le manchon (3) et l'anneau de soudage (7), qui soit durable, résistant et étanche au milieu (1, 2)
